## Europäisches Patentamt
## European Patent Office
## Office européen des brevets

(19)

(11) Veröffentlichungsnummer: **0 224 732**
**B1**

(12) # EUROPÄISCHE PATENTSCHRIFT

(45) Veröffentlichungstag der Patentschrift:
**14.12.88**

(51) Int. Cl.⁴: **F 02 B 37/12**

(21) Anmeldenummer: **86115222.1**

(22) Anmeldetag: **03.11.86**

(54) Vorrichtung an einer aufgeladenen Brennkraftmaschine.

(30) Priorität: **04.12.85 DE 3542782**

(43) Veröffentlichungstag der Anmeldung:
**10.06.87 Patentblatt 87/24**

(45) Bekanntmachung des Hinweises auf die Patenterteilung:
**14.12.88 Patentblatt 88/50**

(84) Benannte Vertragsstaaten:
**AT CH DE FR GB IT LI SE**

(56) Entgegenhaltungen:
**EP-A-0 123 074**
**BE-A-555 740**
**DE-A-1 929 126**
**DE-A-2 149 401**
**US-A-4 534 173**

(73) Patentinhaber: **AUDI AG, Postfach 220, D-8070 Ingolstadt (DE)**

(72) Erfinder: **Piech, Ferdinand, Dipl.- Ing., Gerolfinger Strasse 128, D-8070 Ingolstadt (DE)**

(74) Vertreter: **Le Vrang, Klaus, AUDI AG Postfach 220 Patentabteilung I/EQP, D-8070 Ingolstadt (DE)**

LIBER, STOCKHOLM 1988

EP 0 224 732 B1

## Beschreibung

Die Erfindung betrifft eine Vorrichtung an einer aufgeladenen Brennkraftmaschine, insbesondere für Kraftfahrzeuge, gemäß dem Oberbegriff des Patentanspruches 1.

Eine gattungsgemäße Brennkraftmaschine ist in der DE-A-2 647 836 beschrieben. Dabei ist ein Dreiwegeventil vorgesehen, welches abhängig von einem Brennstoffregler bei geringer Last der Brennkraftmaschine eine Teilmenge der Ladeluft über eine Umluftleitung vor die Turbine des Abgasturboladers leitet. Dadurch soll insbesondere bei Leerlaufbetrieb und im unteren Teillastbereich der Brennkraftmaschine die Drehzahl des Abgasturboladers hochgehalten werden, damit beim Beschleunigen möglichst schnell ein adäquater Ladedruck vorliegt.

Sofern die Umluft nahe an den Auslässen der Brennräume der Brennkraftmaschine in die Abgasleitungen eingeleitet wird, wird zusätzlich eine Nachverbrennung erzielt. Diese Nachverbrennung, die gegebenenfalls durch eine geeignete Kraftstoffzumessung an der Brennkraftmaschine gezielt herbeigeführt werden kann, trägt ebenfalls zur Ladedruckerhöhung im Leerlauf, bei Schubbetrieb oder im Teillastbetrieb der Brennkraftmaschine bei.

Aufgrund dieser Nachverbrennung, die im übrigen relativ unkontrolliert vor sich geht, können im Abgasleitungssystem Druckschwankungen entstehen, die wiederum zu Strömungstörungen am Umluftventil führen können und unerwünscht sind.

Aufgabe der Erfindung ist es, durch Maßnahmen am Umluftventil eine gezielte Nachverbrennung im Abgasleitungssystem, eine verbesserte Ladedrucksteuerung sowie Verbrennungsluftförderung im unteren Drehzahlbereich der Brennkraftmaschine herzustellen.

Diese Aufgabe wird mit den Merkmalen des Patentanspruches 1 gelöst. Durch die erfindungsgemäßen Maßnahmen wird also nicht wie bisher kontinuierlich, sondern periodisch in der Ausschubphase Verbrennungsluft in das Abgasleitungssystem überführt. Der besondere Vorteil ist dabei die gezielte Steuerbarkeit der Luftzuführung sowohl zeitlich als gegebenenfalls auch der Menge und der Verteilung. Die Luftzuführung kann somit so erfolgen, daß bei auftretenden Druckspitzen, Strömungsrückschlägen etc. jeweils das Umluftventil geschlossen ist. Andererseits kann exakt mit der Ausschubphase oder je nach den Leistungs-, Strömungs- und Zündverhältnissen (Kraftstoffanteil fett oder mager) kurzzeitig vor- oder nachher die Luftzuführung erfolgen, so daß eine sichere, gleichmäßige Nachzündung bei einem hohen mittleren Abgasdruck erzielt und die Turbine des Abgasturboladers auf hoher Drehzahl gehalten wird.

Das Umluftventil kann entsprechend den Merkmalen des Anspruches 2 über eine Betriebseinrichtung der Brennkraftmaschine gesteuert oder angesteuert sein. Die Betriebseinrichtung kann beispielsweise die Kurbelwelle oder die Nockenwelle der Brennkraftmaschine sein, welche mittels eines Zahnriemens ein Drehventil als Umluftventil antreibt. Bei einem definierten Übersetzungsverhältnis zwischen Kurbel- bzw. Nockenwelle ist dann sichergestellt, daß stets während der Ausschubphase des einen oder mehrerer Zylinder jeweils das Umluftventil geöffnet ist. Bei einem elektrisch betätigten Umluftventil könnten als Betriebseinrichtung zur Ansteuerung die Zündeinrichtung der Brennkraftmaschine herangezogen sein. Insbesondere bei einer mehrzylindrigen Brennkraftmaschine kann dabei der Zündimpuls für den einen Zylinder gegebenenfalls als Öffnungsimpuls für einen gerade in der Ausschubphase befindlichen, anderen Zylinder dienen.

Durch die Merkmale des Anspruches 3 kann eine definierte Umluftmenge jeweils unmittelbar den in der Ausschubphase befindlichen Maschinenauslaß zugeführt werden. Da die Abgase hier noch eine sehr hohe Temparatur aufweisen, kann bei Zuführung einer genügenden Umluftmenge eine sichere Nachzündung bei einem guten Nachverbrennungswirkungsgrad erreicht werden. Gegebenenfalls kann jedoch auch eine Einleitung der Umluft unmittelbar in den Auspuffkrümmer der Brennkraftmaschine zur Erzielung einer befriedigenden Nachverbrennung ausreichend sein.

Eine bevorzugte Maßnahme zur Steuerung des Nachverbrennungsgrades und damit zur Beeinflussung des Ladedruckes und der benötigten Leistung unmittelbar über das Umluftventil ist im Anspruch 4 angeführt. Beispielsweise kann durch Zurücknehmen der Umluftmenge der Ladedruck verringert oder Übertemperaturen vermieden werden. Ferner kann die Umluftmenge abhängig von der momentanen Last der Brennkraftmaschine abhängig verändert werden. Selbstverständlich kann über diese Mengensteuerung die Umluftzufuhr auch vollständig unterbrochen werden, z. B. bei einer auftretenden Überhitzung des Abgasturboladers. Eine Veränderung des Durchströmzeitpunktes mit Bezug zur Abgas-Ausschubphase nach früher oder später kann abhängig von der Temperatur des Abgases, des umgebenden Abgasleitungssystemes und insbesondere von der Drehzahl der Brennkraftmaschine bzw. der Abgas-Strömungsgeschwindigkeit und gegebenenfalls der Brenngeschwindigkeit bei der Nachverbrennung vorteilhaft sein.

Das Umluftventil kann ein von der Brennkraftmaschine angetriebenes Drehventil gemäß den Merkmalen der Ansprüche 5 bis 8 sein. Dieses Drehventil kann bei einer Zweitakt-Brennkraftmaschine mit Kurbelwellendrehzahl und bei einer Viertakt-Brennkraftmaschine mit Nockenwellendrehzahl angetrieben sein, so daß eine phasenmäßige Zuordnung zur Gaswechselsteuerung der Brennkraftmaschine sichergestellt ist. Die Umluftverteilung kann dabei vorteilhaft durch den Rotor des Umluftventiles erfolgen, wobei mittels einer um diesen Rotor angeordneten Stellhülse mit Durchströmöffnungen sowohl die Durchströmmenge als auch der Durchströmzeitpunkt verstellbar sind.

Gemäß den Merkmalen des Anspruches 9 wäre es jedoch auch möglich, ein elektrisch, pneumatisch oder hydraulisch betätigtes Umluftventil einzusetzen. Eine pneumatische oder hydraulische Betätigung bietet sich insbesondere dann an, wenn in dem Kraftfahrzeug bereits pneumatische oder hydraulische Steuervorrichtungen vervendet sind und somit die bereits vorhandene Druckmittelquelle verwendbar ist.

Ein Ausführungsbeispiel der Erfindung ist im folgenden mit weiteren Einzelheiten näher erläutert. Die Zeichnung zeigt in

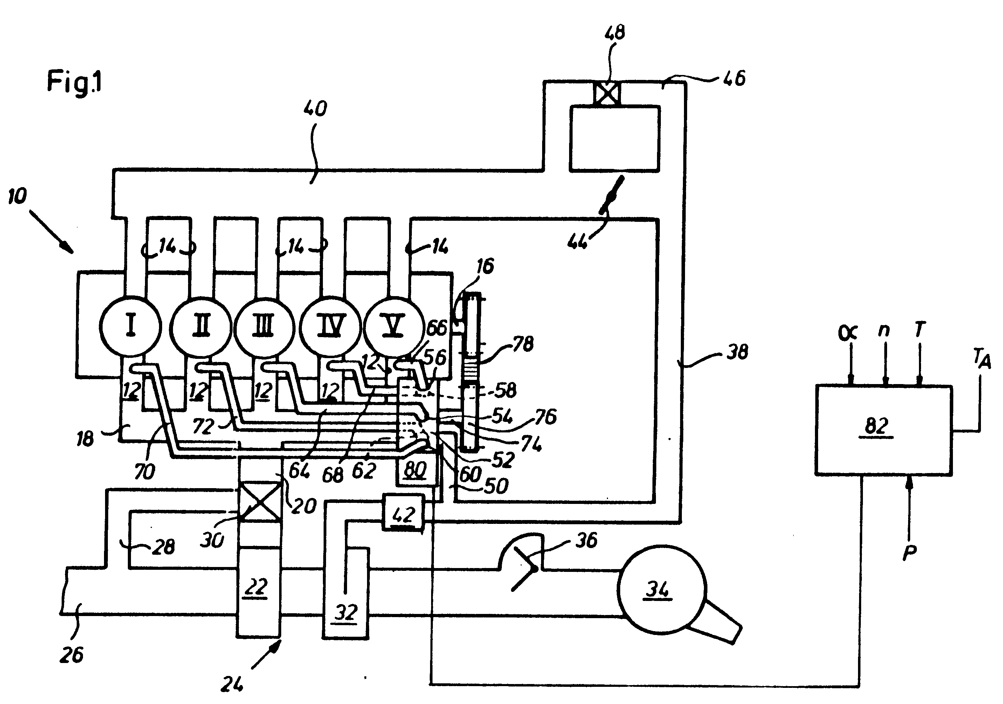

Fig. 1    eine Brennkraftmaschine in schematischer Darstellung mit einem von der Nockenwelle angetriebenen Umluftventil,

Fig. 2    das Umluftventil gemäß Fig. 1 im Querschnitt und

Fig. 3    eine Ansicht X der Fig. 2 auf die Stellhülse des Umluftventiles.

Eine Viertakt-Hubkolben-Brennkraftmaschine 10 mit fünf Zylindern I bis V weist für den Gaswechsel jeweils Auslaßkanäle 12 und Einlaßkanäle 14 auf. Die Gaswechselsteuerung erfolgt in bekannter Weise über nicht dargestellte Gaswechselventile und Ventilbetätigungselemente, die von einer Nockenwelle 16 angetrieben sind.

Die Abgase der Brennkraftmaschine 10 werden über einen Abgaskrümmer 18 und ein Abgassammelrohr 20 der Abgasturbine 22 eines nicht näher dargestellten Abgasturboladers 24 zugeleitet. Nach dem Durchströmen der Abgasturbine 22 werden die Abgase über ein nicht näher dargestelltes Auspuffsystem 26 in die Atmosphäre abgeleitet. Bei einem zu hohen Abgasangebot kann über eine Bypassleitung 28 und ein Abblasventil 30 Abgas an der Abgasturbine 22 vorbeigeleitet werden.

Die Abgasturbine 22 treibt einen Verdichter 32 an, der über ein Luftfilter 34 und einen Luftmassenmesser 36 einer nicht dargestellten Brennstoff-Zumeßeinrichtung Verbrennungsluft ansaugt und diese über eine Ladeluftleitung 38 und ein Verteilersaugrohr 40 zu den Einlaßkanälen 14 der Brennkraftmaschine 10 fördert. Stromab des Verdichters 32 ist in der Ladeluftleitung 38 ein Ladeluftkühler 42 sowie eine willkürlich steuerbare Drosselklappe 44 vorgesehen. Mittels einer die Drosselklappe 44 umgehenden Leitung 46 mit einem Steuerventil 48 kann sowohl eine Leerlauf-Füllungsregelung als auch eine Füllungsanhebung bei Schubbetrieb durchgeführt werden.

Von der Ladeluftleitung 38 zweigt eine Umluftleitung 50 ab, die zu einem Umluftventil 52 führt. Das Umluftventil 52 weist über seinen Umfang verteilt je Zylinder der Brennkraftmaschine einen Ausgang 54, 56, 58, 60, 62 auf, die über Einzelleitungen 64, 66, 68, 70, 72 mit den Abgaskanälen 12 der Brennkraftmaschine verbunden sind. Der Rotor des Umluftventiles 52 ist über eine Welle 74 mit einem Zahnrad 76 von dem auch die Nockenwelle 16 antreibenden Zahnriemen 78 von der Kurbelwelle der Brennkraftmaschine angetrieben. Das Übersetzungsverhältnis beträgt wie bei der Nockenwelle 2 : 1.

Am Umluftventil 52 ist ein elektrischer Stellmotor 80 befestigt, der von einem elektronischen Steuergerät 82 angesteuert ist. In dem Steuergerät 82 werden über nicht dargestellte Sensoren die Last $\alpha$ der Brennkraftmaschine 10, z. B. entsprechend der Stellung der Drosselklappe 44, die Drehzahl n und die Temparatur T der Brennkraftmaschine 10, die Temparatur $T_A$ des Abgasturboladers 24, sowie der Ladedruck P in der Ladedruckleitung stromab des Verdichters 32 jedoch stromauf der Drosselklappe 44 erfaßt. Diese Daten werden in dem Steuergerät 82 ausgewertet und das Umluftventil 52 bzw. dessen Durchströmmenge und Durchströmzeitpunkt nach Maßgabe eines in dem Steuergerät 82 abgespeicherten Kennfeldes verstellt.

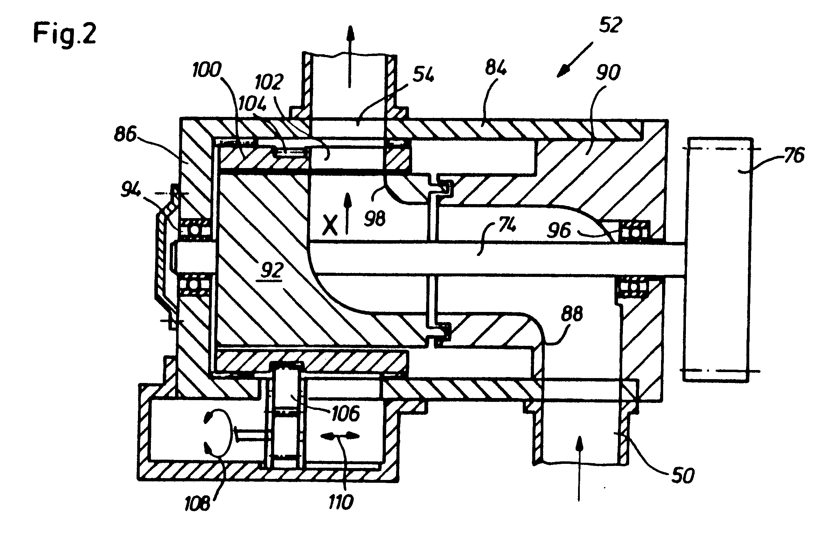

Das Umluftventil 52 (Fig. 2) ist ein Drehventil mit einem ringförmigen Gehäuseteil 84 mit einer Stirnwand 86, in welches ein mit einem abgewinkelten Luftführungskanal 88 versehener Gehäuseabschnitt 90 eingesetzt ist. In diesem Gehäuse ist ein Rotor 92 über die Welle 74 und Wälzlager 94, 96 drehbar gelagert. Der Rotor 92, in dem ein an den Luftführungskanal 88 anschließender, ebenfalls abgewinkelter Luftführungskanal 98 ausgebildet ist, läuft durch geringe Spalte berührungsfrei gegenüber dem Gehäuse und einer in dem Gehäuseteil 84 axial verschiebbar sowie verdrehbar geführten Stellhülse 100.

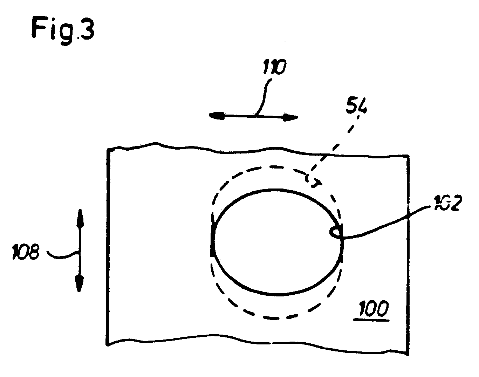

Die Stellhülse 100 ist über ihren Umfang mit 5 Durchströmöffnungen 102 versehen, deren ovaler Öffnungsquerschnitt aus der Fig. 3 ersichtlich ist. In der gezeichneten Stellung überdecken sich diese Öffnungen 102 mit den Ausströmöffnungen der Ausgänge 54, 56, 58, 60, 62 im Gehäuseteil 84, wobei die Ausströmöffnungen in Umfangsrichtung größer ausgebildet sind (vgl. dazu Fig. 3, Ausströmöffnung 54). Die der Stellhülse 100 benachbarte Öffnung des Luftführungskanales 98 im Rotor 92 ist konform den Durchströmöffnungen 102.

In die Stellhülse 100 ist über einen definierten Umfangsbereich eine Stirnverzahnung 104 eingearbeitet, in die ein Verstellzahnrad 106 des im übrigen nicht näher dargestellten Stellmotores 80 eingreift. Das Verstellzahnrad 106 kann - wie mit den Pfeilen 108, 110 angedeutet - verdreht oder axial verschoben werden, wobei bei einer Verdrehung die Stellhülse 100 um ihre mit der Drehachse der Welle 74 zusammenfallende Drehachse verdreht und bei einer Verschiebung entlang dieser Drehachse verschoben wird. Wie man aus der Zeichnung ohne weiteres ersehen kann, wird bei einer Verdrehung der Stellhülse 100 in der einen oder der anderen Drehrichtung der Durchströmzeitpunkt, der durch die Überdeckung des Luftführungskanales 98 im Rotor 92 mit der korrespondierenden Durchströmöffnung 102 bestimmt wird, nach früher oder später mit Bezug zur Abgas-Ausschubphase verlegt. Andererseits kann durch Verschiebung der Stellhülse 100 in axialer Richtung die Durchströmmenge ausgehend vom größtmöglichen Querschnitt bis gegen 0 verringert werden.

Bei laufender Brennkraftmaschine überstreicht der Luftführungskanal 98 des sich mit Nockenwellendrehzahl drehenden Rotors 92 bei einer Umdrehung die fünf Durchströmöffnungen 102, so daß nacheinander die Umgehungsleitung 50 mit den Ausgängen 54, 56, 58, 60, 62 des Umluftventiles verbunden ist. Es versteht sich, daß die Ausgänge über die Einzelleitungen 64, 66, 68, 70, 72 jeweils an die Zylinder I bis V bzw. an deren Abgaskanäle 12 angeschlossen sind, die in zeitlicher Reihenfolge hintereinander in der Ausschubphase sind. Diese Reihenfolge entspricht logischer Weise der Zündfolge der Brennkraftmaschine. Der jeweils zur Umluftleitung offene Abgaskanal 12 wird somit während der Abgas-Ausschubphase mit zusätzlicher Verbrennungsluft aus der Ladedruckleitung 38 versorgt, so daß eine sichere Nachzündung und Nachverbrennung erfolgt. Soll eine Vor- oder Nachverstellung des Durchströmzeitpunktes oder eine Verringerung der Durchströmmenge erfolgen, so wird der elektrische Stellmotor 80 über das Steuergerät 82 angesteuert und die Stellhülse 100 mittels des Stellzahnrades 106 entsprechend verdreht oder axial verschoben.

Die Erfindung ist nicht auf das gezeigte Asführungsbeispiel beschränkt. Beispielsweise können die Querschnitte der Durchström- bzw. Ausströmöffnungen auch rund, rechteckig oder asymmetrisch profiliert ausgebildet sein; letztere zur Erzielung einer progressiven oder degressiven Öffnungscharakteristik. Ferner kann der Rotor nach Art einer Lochblende ausgeführt sein.

**Patentansprüche**

1. Vorrichtung an einer aufgeladenen Brennkraftmaschine (10), insbesondere für Kraftfahrzeuge, mit einem Abgasturbolader (24) mit einer vom Abgas der Brennkraftmaschine (10) beaufschlagten Turbine (22) und einem in eine Ladeluftleitung (38) Verbrennungsluft fördernden Verdichter (32), bei der zwischen der Ladeluftleitung (38) stromab des Verdichters (32) und der Abgasleitung (20) stromauf der Turbine (22) eine Umluftleitung (50) mit einem steuerbaren Umluftventil (52) vorgesehen ist, das in Abhängigkeit der Betriebszustände der Brennkraftmaschine (10) die Umluftleitung (50) in einer Verschlußstellung vollständig schließen kann, dadurch gekezeichnet, daß das Umluftventil (52) derart gesteuert ist, daß es außerhalb seiner Verschlußstellung die Umluftleitung (50) periodisch während der Abgas-Ausschubphasen der Brennkraftmaschine (10) öffnet und zwischen den Ausschubphasen schließt.

2. Vorrichtung nach Anspruch 1, dadurch gekennzeichnet, daß das Umluftventil (52) über eine Betriebseinrichtung (Kurbelwelle, Nockenwelle, Zündung etc.) der Brennkraftmaschine (10) gesteuert ist.

3. Vorrichtung nach den Ansprüchen 1 und 2, dadurch gekennzeichnet, daß das Umluftventil (52) je Zylinder der Brennkraftmaschine (10) einen Ausgang (54, 56, 58, 60, 62) aufweist, welcher über je eine Leitung (64, 66, 68, 70, 72) unmittelbar mit dem jeweiligen Brennkraftmaschinen-Auslaß (12) verbunden ist.

4. Vorrichtung nach den Ansprüchen 1 bis 3, dadurch gekennzeichnet, daß der Durchströmquerschnitt durch das Umluftventil (52) und/oder der Durchströmzeitpunkt veränderbar bzw. steuerbar ist.

5. Vorrichtung nach einem oder mehreren der Ansprüche 1 bis 4, dadurch gekennzeichnet, daß das Umluftventil (52) einen drehbar in einem Gehäuse (84, 86, 90) gelagerten Rotor (92) aufweist, der von der Brennkraftmaschine (10) angetrieben ist und die Umluftleitung (50) auf bzw. zusteuert.

6. Vorrichtung nach Anspruch 5, dadurch gekennzeichnet, daß der Rotor (92) bei einer Viertakt-Brennkraftmaschine (10) mit Nockenwellendrehzahl angetrieben ist und daß im Gehäuse (84) je Zylinder der Brennkraftmaschine ein Auslaß (54, 56, 58, 60, 62) vorgesehen ist, welcher von einer im Rotor (92) angeordneten, mit der Ladeluftleitung verbundenen Öffnung eines Luftführungskanales (98) überstrichen wird.

7. Vorrichtung nach den Ansprüchen 5 und 6, dadurch gekennzeichnet, daß der Rotor (92) walzenförmig gestaltet ist und von einer Stellhülse (100) mit je Zylinder einer Durchströmöffnung (102) umgeben ist und daß die Stellhülse (100) zur zeitlichen Vor- oder Nachverstellung der Öffnungsphase im Gehäuse verdrehbar und/oder zur Verstellung des Öffnungsquerschnittes axial verschiebbar ist.

8. Vorrichtung nach Anspruch 7, dadurch gekennzeichnet, daß die Verstellung der Stellhülse (100) mittels eines Stellmotores (80) abhängig von der Last $\alpha$ und/oder von der Drehzahl n und/oder von der Temperatur T der Brennkraftmaschine (10) und/oder von der Temperatur $T_A$ des Abgasturboladers (24) und/oder vom Druck P in der Ladeluftleitung (38) erfolgt.

9. Vorrichtung nach einem oder mehreren der Ansprüche 1 bis 4, dadurch gekennzeichnet, daß das Umluftventil elektromagnetisch, pneumatisch oder hydraulisch betätigt ist.

## Claims

1. Device in a supercharged internal combustion engine (10), especially for motor vehicles, with an exhaust gas driven turbosupercharger (24) having a turbine (22) acted upon by the exhaust gas from the internal combustion engine (10) and also a compressor (32) delivering combustion air into an induction air conduit (38), wherein between the induction air conduit (38) downstream of the compressor (32) and the exhaust gas conduit (20) upstream of the turbine (22) a bypass air conduit (50) is provided with a controllable bypass air valve (52) which can close the bypass air conduit (50) completely in a closure position in dependence on the operating states of the internal combustion engine (10), characterised in that the bypass air valve (52) is so controlled that outside of its closure position it periodically opens the bypass air conduit (50) during the exhaust gas expulsion phases of the internal combustion engine (10) and closes it between the expulsion phases.

2. Device according to claim 1, characterised in that the bypass air valve (52) is controlled by means of an operating device (crankshaft, camshaft, ignition system, etc.) of the internal combustion engine (10).

3. Device according to claims 1 and 2, characterised in that the bypass air valve (52) comprises an outlet (54, 56, 58, 60, 62) per cylinder of the internal combustion engine (10), this outlet being connected via a respective conduit (64, 66, 68, 70, 72) in each case directly to the respective internal combustion engine outlet (12).

4. Device according to claims 1 to 3, characterised in that the throughflow cross-section through the bypass air valve (52) and/or the instant of throughflow are/is variable or controllable.

5. Device according to one or more of claims 1 to 4, characterised in that the bypass air valve (52) has a rotor (92) which is mounted to be rotatable in a housing (84, 86, 90), and which is driven by the internal combustion engine (10), said rotor controlling the opening and closing of the bypass air conduit (50).

6. Device according to claim 5, characterised in that the rotor (92) is driven at the camshaft rotational speed in a four-stroke internal combustion engine (10), and that in the housing (84) there is provided for each cylinder of the internal combustion engine an outlet (54, 56, 58, 60, 62) which is travelled over by a mouth of an air guide duct (98), this mouth being arranged in the rotor (92) and being connected to the induction air conduit.

7. Device according to claims 5 and 6, characterised in that the rotor (92) is cylindrical in shape and is surrounded by an adjusting sleeve (100) with one throughflow aperture (102) per cylinder, and that the adjusting sleeve (100) is rotatable in the housing for adjusting the opening phase forwards or backwards in time and/or axially adjustable for adjusting the opening cross-section.

8. Device according to claim 7, characterised in that the adjusting of the adjusting sleeve (100) is effected by means of an adjusting motor (80) in dependence on the load $\alpha$ and/or on the rotational speed n and/or on the temperature T of the internal combustion engine (10) and/or on the temperature $T_A$ of the exhaust gas driven turbosupercharger (24) and/or on the pressure P in the induction air conduit (38).

9. Device according to one or more of claims 1 to 4, characterised in that the bypass air valve is operated electromagnetically, pneumatically, or hydraulically.

## Revendications

1. Dispositif sur un moteur à combustion interne suralimenté (10), en particulier pour véhicules automobiles, comportant une turbosoufflante à gaz d'échappement (24) avec une turbine (22) alimentée par les gaz d'échappement du moteur à combustion interne (10) et un compresseur (32) qui refoule de l'air comburant dans une conduite d'air de suralimentation (38), dispositf dans lequel il est prévu, entre la conduite d'air de suralimentation (38) en aval du compresseur (32) et la conduite de gaz d'échappement (20) en amont de la turbine (22), une conduite d'air de dérivation (50) contenant une valve d'air de dérivation commandable (52) qui, en fonction des états de fonctionnement du moteur à combustion interne (10), peut fermer complètement, dans une position de fermeture, la conduite d'air de dérivation (50), caractérisé en ce que la valve d'air de dérivation (52) est commandée de telle nanière qu'en dehors de sa position de fermeture, elle s'ouvre périodiquement pendant les phases d'échappement des gaz d'échappement du moteur à combustion interne (10) et se ferme entre les phases d'échappement.

2. Dispositif selon la revendication 1, caractérisé en ce que la valve d'air de dérivation (52) est commandée au moyen d'un dispositif de fonctionnement (vilebrequin, arbre à cames, allumage, etc.) du moteur à combustion interne (10).

3. Dispositif selon la revendication 1 ou 2, caractérisé en ce que la valve d'air de dérivation (52) présente, pour chaque cylindre du moteur à combustion interne (10), une sortie (54, 56, 58, 60, 62) qui est reliée directement, par une conduite respective (64, 66, 68, 70, 72), à l'échappement (12) respectif du moteur à combustion interne.

4. Dispositif selon l'une quelconque des revendications 1 à 3, caractérisé en ce que la section de passage à travers la valve d'air de dérivation (52) et/ou l'instant de passage peuvent être modifiés ou commandés.

5. Dispositif selon l'une quelconque des revendications 1 à 4, caractérisé en ce que la valve d'air de dérivation (52) comporte un rotor (92) qui est monté à rotation dans un boîtier (84, 86, 90), est entraîné par le moteur à combustion interne (10) et ouvre ou ferme la conduite d'air de dérivation (50).

6. Dispositif selon la revendication 5, caractérisé en ce que dans le cas d'un moteur à combustion interne (10) à quatre temps, le rotor (92) est entraîne à la vitesse de rotation de l'arbre à cames et en ce qu'il est prévu dans le boîtier (84), pour chaque cylindre du moteur à combustion interne, une sortie (54, 56, 58, 60, 62) qui est balayée par un orifice d'un passage de guidage d'air (98) disposé dans le rotor (92) et communiquant avec la conduite d'air de suralimentation.

7. Dispositif selon la revendication 5 ou 6, caractérisé en ce que le rotor (92) est réalisé sous forme cylindrique et est entouré par une douille de réglage (100) comportant une ouverture de passage (102) pour chaque cylindre, et en ce que la douille de réglage (100) peut subir une rotation dans le boîtier pour le réglage dans le temps de la phase d'ouverture vers l'avance ou vers le retard et/ou un déplacement axial pour le réglage de la section des ouvertures.

8. Dispositif selon la revendication 7, caractérisé en ce que le positionnement de la douille de réglage (100) est effectué ou moyen d'un moteur de positionnement (80) en fonction de la charge $\alpha$ et/ou de la vitesse de rotation n et/ou de la température T du moteur à combustion interne (10) et/ou de la température $T_A$ de la turbosoufflante à gaz d'échappement (24) et/ou de la pression P dans la conduite d'air de suralimentation (38).

9. Dispositif selon l'une quelconque des revendications 1 à 4, caractérisé en ce que la valve d'air de dérivation est actionnée électromagnétiquement, pneumatiquement ou hydrauliquement.

Fig.1

Fig.2

Fig.3